# EUROPEAN PATENT APPLICATION

(11) **EP 1 610 439 A1**
(43) Date of publication of application: **28.12.2005**
(21) Application number: 04253822.3
(22) Date of filing: 25.06.2004
(51) Int. Cl.: H02J 7/02, H04M 1/00

(54) **Power transferring system**

(71) Applicant: Nokia Corporation, 02150 Espoo (FI)
(72) Inventor: Naskali, Matti, Tokyo 158-0084 (JP)
(74) Representative: Slingsby, Philip Roy

(57) **Abstract**

An arrangement for use with a mobile communications device, the arrangement comprising: a flexible magnetisable element (1); and a power supply unit comprising a first electrically conductive coil (3); wherein the magnetisable element is capable of receiving the power supply (5) such that the first coil is maintained adjacent to the magnetisable element, thereby creating an inductive connection between the power supply unit and the magnetisable element; and wherein the magnetisable element is further capable of receiving a mobile communications device, the device comprising a second electrically conductive coil (2), such that the second coil is maintained adjacent to the magnetisable element, thereby creating an inductive connection between the magnetisable element and the device for transferring power from the power supply to the device.

## Description

### Field of the Invention

The present invention relates to the provision of power to portable devices.

### Background of the Invention

Power for running a portable device is generally supplied either by means of internal batteries or by some external power source. For example, personal digital assistants (PDAs) can generally operate either by drawing power from a rechargeable battery located within the PDA or by drawing power from a mains supply via a cradle or other connection. Typically, rechargeable batteries within portable devices require to be charged by connection to a mains power supply. However, it is not always easy for a user of a portable device to find access to a mains power supply and it can therefore be useful to charge a device from a portable power supply.

Methods are known for providing an electrical connection between a power supply and a portable device, for charging a battery within the device or for providing a continuous supply of power to drive the device. However, disadvantages with such electrical methods are that the components required for connecting a power supply to a device are typically not resistant to dirt and are not very hard wearing. Connectors can become corroded by water and can become dirty, leading to poor electrical connections between the power supply and the portable device. These drawbacks are especially problematic when portable devices are being used in challenging environments, for example where water is present.

Inductive methods for providing power are also known. For example, co-pending US Application No. 2003/0003971 describes a charging system for providing power to portable equipment. In that invention, a solid induction core is provided which penetrates through a coil connected to a power supply and a coil connected to portable equipment. In the described embodiments of this invention, the induction core is shaped as a hook and extends from a vertical wall on which is mounted a charger body for supplying power to the portable equipment.

It is also known to use inductive connections in applications such as cars, so that when a rear door is closed and the car's electrical power supply is switched on, rear lamps are powered inductively. Inductive charging is also used for devices such as toothbrushes. Typically, a first coil is provided in a charging element which is adapted for connection to a mains power supply, and a second coil is provided within the device to be charged. By bringing the device close to the charging element, for example by fixing it within a mount located in the charging element, power can be transferred from the charging element to the device.

Known systems using inductive methods to provide methods are not easily portable. Additionally, some arrangements can be cumbersome as magnetic inductive cores are often heavy and bulky.

It is desirable to produce a portable power transferring system for providing power to a portable device which overcomes the disadvantages associated with prior systems.

### Statement of the Invention

According to a first aspect of the present invention there is provided an arrangement for use with a mobile communications device, the arrangement comprising: a flexible magnetisable element; and a power supply unit comprising a first electrically conductive coil; wherein the magnetisable element is capable of receiving the power supply such that the first coil is maintained adjacent to the magnetisable element, thereby creating an inductive connection between the power supply unit and the magnetisable element; and wherein the magnetisable element is further capable of receiving a mobile communications device, the device comprising a second electrically conductive coil, such that the second coil is maintained adjacent to the magnetisable element, thereby creating an inductive connection between the magnetisable element and the device for transferring power from the power supply to the device.

The arrangement could conveniently by used with a mobile communications device that has a rechargeable battery, such that power transferred from the power supply unit to the mobile communications device acts to recharge the battery.

According to a second aspect of the present invention there is provided a clip-on powering accessory for powering a mobile communications device having external power terminals whereby it can be powered, the accessory having a pair of connectors for connecting to the power terminals of the device and comprising an electrically conductive coil for inductively receiving power, the coil being connected across the connectors.

According to a third aspect of the present invention there is provided a portable power transferring system comprising: a power supply unit comprising a first electrically conductive coil; a flexible magnetisable element; and a mobile communications device comprising a second electrically conductive coil; wherein the element is capable of being positioned adjacent to the first and second coils, thereby inductively coupling the power supply to the mobile communications device such that power can be transferred via the magnetisable element from the power supply to the mobile communications device.

The arrangement or system may be adapted to be wearable by a user, and the magnetisable element could suitably be a belt.

The power supply unit could suitably comprise a rechargeable battery.

The flexible magnetisable element could suitably form a part of a fashion accessory or garment.

The mobile communications device in the system could comprise a rechargeable battery such that the power transferred from the power supply unit to the mobile communications device acts to recharge the battery.

### Brief Description of Drawings

The present invention will now be described by way of example with reference to the accompanying drawings, in which:
Figure 1 shows a power transferring system;
Figure 2 shows a magnetic belt;
Figure 3 shows a portable power transferring system; and
Figure 4 shows a belt fastener.

### Detailed Description

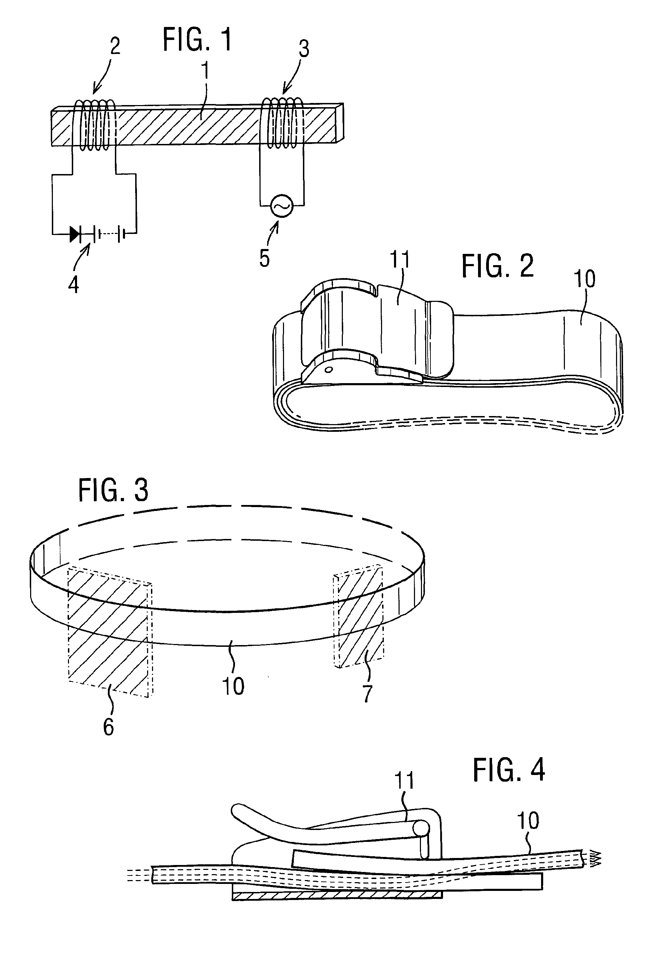

Figure 1 shows an element 1 of magnetic material with wire coils 2, 3 arranged to surround the element 1. Coil 2 is connected to a rechargeable battery 4, and the battery and the coil 2 are located within the casing of a portable device such as a mobile communications handset. The coil 3 is connected to an alternating current power supply 5, which could be a mains supply or one or more rechargeable or non-rechargeable batteries connected to a appropriate electronics for creating alternating current.

In the arrangement shown in figure 1, the rechargeable battery 4 and the power supply 5 are inductively connected or coupled by the magnetic element 1. The power supply 5 causes alternating current to flow through the coil 3. This changing current induces a changing magnetic field in the magnetic element 1, and this magnetic field in turn induces a current in the coil 2. The current in coil 2 creates a potential difference across the battery 4 and causes the battery to charge. In this way, power is transferred from the power supply 5 to the rechargeable battery 4.

In inductive arrangements such as that shown in figure 1, it is preferable to position the coils of the power supply and the portable device around the magnetisable element as illustrated because this induces a relatively strong magnetic field in the element; however, the inventive concept could also be achieved by merely locating the coils close to the magnetisable element, although such an arrangement would be very much less effective at transferring power because a relatively weak field would be induced in the element.

In order to achieve objects of the present invention, the magnetic element 1 is made of a flexible material so that it can be worn or attached to an object such as a bag for ease of carrying. Figure 2 shows an example of a flexible magnetic element 1. The belt 10 can be worn by a user and fastened with buckle 11. The belt 10 suitably comprises a ferromagnetic material such as a composite of ferromagnetic particles and a plastics material. By forming the magnetic element 1 into an object such as a belt, it can be fixed in place and made robust against movement of a user. Furthermore, by using inductive charging in this way, bare electrical connections are avoided so that the system as a whole can be made resilient to water and dirt.

The element 1 could also be formed into the strap of a bag or any suitable garment. When a user wishes to provide power to a device, the device can then be positioned with the coil 2 surrounding the element 1 as shown in figure 1. The belt or strap could be unfastened and a portion of the portable device comprising the coil 2 could be fitted onto the belt and slid around to a comfortable position for the user. A power supply can also be attached to the belt 10 with the coil 3 surrounding the element 1. Such an arrangement is illustrated in figure 3, where a portable device 6 and a charger or other power supply 7 can be seen to be moveably attached to a belt 10.

Coils connected to power supplies or portable devices could be integral with the power supplies or devices, or alternatively could be removably attached to them. If integral, a coil would need to be located near a surface of the object in order to allow the coil to inductively couple with the magnetisable element Figure 4 shows a portion of an exemplary buckle for use with embodiments of the present invention. The belt 10 passes through the buckle 11 and the buckle is arranged to hold overlapping parts of the buckle in contact with each other to provide a continuous loop of magnetic material, as indicated by the arrows in figure 4.

In a particular embodiment, the magnetic material used as the element 1 has 10% permeability compared with ferrite material typically used in Switch Mode Power Supply and transformers.. When a strip of this material is used, a cross-sectional area of around 0.6cm² is needed to supply the power required to charge a typical mobile phone. For example, a magnetic belt having a thickness of 2.5 mm and a width of 22mm would be adequate. To supply the power required to operate a typical Bluetooth headset, an element of cross-sectional area of around 8mm² would be satisfactory. An element having a thickness of 1 mm and a width of 8mm would be suitable. In one arrangement the element has a cross-sectional area of 1cm² or 50mm² or less, and in another arrangement the element has a cross-sectional area of 10mm² or less. Preferably the element has a thickness of 5mm or less, and more preferably, 2mm or less.

It will be understood by skilled readers that the present invention can be applied to a wide variety of situations. Some examples of possible applications of the invention are listed below.

A device for providing reminders to a user could be attached to a garment. Such an arrangement could be useful in many situations, including for nurses and doctors in hospitals. A lamp can be attached to a life jacket for use at sea. In this way, a continuous supply of power can be provided to cause the lamp to emit light. Because embodiments of the present invention do not require galvanic connections, the system can straightforwardly be made waterproof. Heating elements could be provided in gloves. Sensors and feedback actuators could be inductively connected to a power source in a jacket. Wireless communication systems such as Bluetooth could be supported by embodiments of the present invention, with power being supplied to a communication device which is arranged to work with a wireless headset. All the divers' gear could be powered by a single battery connected to the divers' clothing or belt. Similarly, electricity could be generated in piezo electric fibres within skis and the electricity could be stored in a chargeable battery or used to power electrical equipment by means of inductive coupling as described above. Many applications can be envisaged, and the examples given above are intended to exemplify, rather than limit, the scope of the present invention.

Preferably, conventional portable devices could be modifiable to be powered according to the described methods by means of affixing a suitable accessory. The accessory could simply comprise a coil, and could optionally include an clip or other part for attaching the device to a magnetisable element such as the belt described above.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. An arrangement for use with a mobile communications device, the arrangement comprising:
a flexible magnetisable element; and
a power supply unit comprising a first electrically conductive coil;
wherein the magnetisable element is capable of receiving the power supply such that the first coil is maintained adjacent to the magnetisable element, thereby creating an inductive connection between the power supply unit and the magnetisable element; and
wherein the magnetisable element is further capable of receiving a mobile communications device, the device comprising a second electrically conductive coil, such that the second coil is maintained adjacent to the magnetisable element, thereby creating an inductive connection between the magnetisable element and the device for transferring power from the power supply to the device.

2. An arrangement according to claim 1 adapted to be wearable by a user.

3. An arrangement according to claim 2 wherein the magnetisable element is a belt.

4. An arrangement according to any preceding claim wherein the power supply unit comprises a rechargeable battery.

5. An arrangement according to any preceding claim for use with a mobile communications device comprising a rechargeable battery wherein power transferred from the power supply unit to the mobile communications device acts to recharge the battery.

6. An arrangement according to any preceding claim wherein the flexible magnetisable element forms a part of a fashion accessory or garment.

7. A clip-on powering accessory for powering a mobile communications device having external power terminals whereby it can be powered, the accessory having a pair of connectors for connecting to the power terminals of the device and comprising an electrically conductive coil for inductively receiving power, the coil being connected across the connectors.

8. A portable power transferring system comprising:
a power supply unit comprising a first electrically conductive coil;
a flexible magnetisable element; and
a mobile communications device comprising a second electrically conductive coil;
wherein the element is capable of being positioned adjacent to the first and second coils, thereby inductively coupling the power supply to the mobile communications device such that power can be transferred via the magnetisable element from the power supply to the mobile communications device.

9. A system according to claim 8 adapted to be wearable by a user.

10. A system according to claim 8 or claim 9 wherein the magnetisable element is a belt.

11. A system according to any of claims 8 to 10 wherein the power supply unit comprises a rechargeable battery.

12. A system according to any of claims 8 to 11 wherein the mobile communications device comprises a rechargeable battery and the power transferred from the power supply unit to the mobile communications device acts to recharge the battery.

13. A system according to any of claims 8 to 12 wherein the flexible magnetisable element forms a part of a fashion accessory or garment.
